# EUROPÄISCHE PATENTSCHRIFT

(11) **EP 0 515 714 B1**
(45) Veröffentlichungstag und Bekanntmachung des Hinweises auf die Patenterteilung: **24.03.1999**
(21) Anmeldenummer: 91108731.0
(22) Anmeldetag: 28.05.1991
(51) Int. Cl.: G06K 9/20

(54) **Verfahren zur rechnergestützten Verarbeitung binärer Rasterbilder**
Computer-aided binary image processing method
Méthode de traitement des trames binaires par ordinateur

(43) Veröffentlichungstag der Anmeldung: 02.12.1992
(73) Patentinhaber: SIEMENS AKTIENGESELLSCHAFT, 80333 München (DE)
(72) Erfinder: Kreich, Joachim, W-8152 Feldolling (DE); Luhn, Achim, Dr., W-8038 Gröbenzell (DE); Maderlechner, Gerd, W-8038 Gröbenzell (DE)

(56) Entgegenhaltungen:
- EP-A- 0 206 214
- 9TH INTERNATIONAL CONFERENCE ON PATTERN RECOGNITION Bd. 1, 14. November 1988, ROME, IT Seiten 425 - 429; K. KISE ET AL.: 'Visiting card understanding system'
- 10TH INTERNATIONAL CONFERENCE ON PATTERN RECOGNITION Bd. 1, 16. Juni 1990, ATLANTIC CITY, US Seiten 567 - 572; J.L. FISHER ET AL: 'A rule-based system for document image segmentation'
- 9TH INTERNATIONAL CONFERENCE ON PATTERN RECOGNITION Bd. 2, 14. November 1988, ROME, IT Seiten 744 - 747; Y. TSUJI: 'Document image analysis for generating syntactic structure description.'

## Beschreibung

Die moderenen Büroautomatisierungssysteme haben entgegen früherer Prognosen den Gebrauch von Papier nicht überflüssig gemacht. Ausgabegeräte wie Laserdrucker und Fax Modems führen dazu, daß die in Papierform produzierte Informationsmenge weiter ansteigt. Dementsprechend steigt auch der Bedarf, auf Papier vorliegende Informationen elektronisch bearbeitbar zu machen. Der zur Zeit beobachtbare Boom des Marktes für Scanner und PC-Fax-Karten bestätigt diesen Trend. Elektrische Schaltpläne, mechanische Konstruktionszeichnungen, Katasterpläne, Landkarten, Materialflußpläne, Rechnungen, Angebote, Patentschriften und Berichte sind Beispiele von Papierdokumenten, für die eine Umsetzung in elektronische Form und eine Weiterverarbeitung z.B. in CAD Systemen, Texteditoren und Datenbanken sinnvoll ist.

Die Erfassung von Dokumenten als elektronisches Faksimile bringt als ersten Schritt zunächst einmal eine erhebliche Einsparung des Platzbedarfs mit sich:
Unter Verwendung einer Komprimierung der abgetasteten Dokumente nach CCITT-Norm Gruppe 4 lassen sich auf einer optischen Platte von 4 GByte Kapazität ca. 40.000 Seiten abspeichern. Im allgemeinen jedoch ist dem Anwender mit dem alleinigen Abtasten der Papiervorlagen noch nicht gedient. Eine Bearbeitung der Vorlage in CAD-Systemen erfordert z.B. die Umsetzung des Rasterbildes in die entsprechenden Datenstrukturen des CAD-Systems. Dies bedeutet, daß das System in der Lage sein muß, in Gruppen von schwarzen Bildpunkten z.B. Kreisbogensegmente oder Polygone zu erkennen. Im Falle von Textdokumenten ist die Erkennung der Schriftzeichen (OCR = Optical Character Recognition) und die Umsetzung in die entsprechenden ASCII oder EBCDIC Codes erforderlich, um das Dokument mit einem Texteditor weiterbearbeiten zu können.

Für die beiden obengenannten Anwendungsfälle, also die Vektorisierung von Pixelgraphiken und die Erkennung von Schriftzeichen (OCR) sind für Workstations und PC's bereits entsprechende Programme auf dem Markt erhältlich. Deren Leistungsfähigkeit und Zuverlässigkeit ist jedoch noch nicht völlig zufriedenstellend, so daß sie für den praktischen Einsatz nur für spezielle Anwendungen in Frage kommen. Außerdem benötigt der Anwender oft noch über OCR und Vektorisierung hinausgehende Erkennungsleistungen, die von den zur Zeit angebotenen Systemen nicht geboten werden. Im Falle der Bearbeitung in CAD Systemen sind z.B. Linienstile und die Symbole elektronischer Bauelemente diejenigen Einheiten, mit denen der Benutzer umgeht. Für die automatische Archivierung von Textdokumenten ist eine Indexierung nach z.B. Autor, Datum, Vorgang, erforderlich. Man benötigt also Informationen über die Bedeutung einzelner Dokumentteile (Transistor, Diode, Datum, Adresse, ...), die weder in den Linienlisten der Vektorisierungsprogramme noch in den Textdateien eines Dokumentes, wie sie von einem OCR-Programm geliefert werden, vorhanden ist.

Es existiert also für die sinnvolle Umsetzung von Papierdokumenten in die elektronische Form noch keine Lösung, die den Erwartungen und Ansprüchen des Anwenders gerecht wird. Die Erfindung betrifft ein Verfahren zur Erkennung und Segmentierung des Layouts von Dokumenten mit hauptsächlich textuellem Inhalt.

Unter dem Layout eines Dokuments verstehen wir die Gruppierung von Buchstaben zu Wörtern, Wörtern zu Zeilen und Zeilen zu Textblöcken, sowie die Anordnung dieser Teile auf der Seite. Da sich die logische Strukturierung eines Dokuments auch in der geometrischen Anordnung seiner Textteile widerspiegelt, ist das Layout ein wichtiger Ansatzpunkt für die automatische Analyse der logischen Bedeutung dieser Teile:
Bei einem Brief wird z.B. ein Datum durch seine Position rechts oben auf der Seite als Absendedatum des Briefes gekennzeichnet. Ein breiter Textblock in der Seitenmitte wird normalerweise ein Inhaltsblock des Briefes sein. Auch ein menschlicher Leser orientiert sich zunächst einmal am Layout eines Dokuments um seine Art (Brief, Bericht, etc.) und die ihn interessierenden Teile schnell erfassen zu können. Eine Voraussetzung für die logische Erfassung eines Dokuments ist daher neben der Schriftzeichenerkennung die Erkennung des Dokumentenlayouts.

Zum besseren Verständnis der Erfindung wird im folgenden zunächst auf die notwendigen Vorverarbeitungsschritte bei der Umwandlung eines Papierdokuments in die elektronische Form eingegangen. Sie sind nicht Gegenstand der Erfindung, sollen aber hier dennoch kurz beschrieben werden.

Der erste Vorverarbeitungsschritt zur Analyse eines Dokuments besteht im Abtasten der Papiervorlage. Dazu werden gewöhnlich Flachbettscanner oder Kameras verwendet. Die Anforderungen an die Auflösung (mindestens 200 dpi) werden heute von allen handelsüblichen Geräten erfüllt.

Das abgetastete Grauwertbild muß zur weiteren Verarbeitung binarisiert, d.h. in ein binäres Bild überführt werden. Hierzu wird eine globale Schwellwertbildung vorgenommen, welche allen Pixeln (Bildpunkten), deren Abtastwert oberhalb einer Schwelle liegt, den Wert 1 (im allgemeinen für schwarz, Vordergrund) zuordnet, und den anderen Bildpunkten den Hintergrundswert 0 zuweist.

Wird die Vorlage nicht exakt achsenparallel in den Scanner eingelegt oder ist die Aufnahmekamera gegenüber der Vorlage verdreht, so muß das Rasterbild des Dokuments vor der weiteren Verarbeitung zum Zwecke der Drehlagenkompensation algorithmisch rotiert werden. Dafür existieren Verfahren, die in der Lage sind die Vorzugsschreibrichtung einer Vorlage auf mehrere Bogenminuten genau zu bestimmen und das Rasterbild parallel zur horizontalen Achse auszurichten (W.Postl 1982, "Halftone recognition by an experimental text and facsimile workstation", Proc. of the 6th International Conference on Pattern Recognition, Munich, F.R.G., pp. 489-491; J.P.Trincklin, 1984, "Conception d'un Système d'Analyse de Documents: Etude et Realisation d'un Module d'Extraction de la Structure Physique de Documents à Support visuel", Dissertationsschrift, Université de France-comte, Besoncan; H.S. Baird (1987), "The Scew Angle of Printed Documents, Advance printing of the SPSE's 40th annual Conf. and Symp. on Hybrid Imaging Systems, Rochester, N.Y., USA, pp 22; A.Dengel, E.Schweizer, 1989, "Rotationswinkelbestimmung in abgetasteten Dokumentbildern", Mustererkennung 1989, Burkhard, Höhne, Neumann (Herausgeber, 11. DRGM Symposium, Hamburg, Informatik-Fachberichte 219, pp. 274-278).

Der folgende Verarbeitungsschritt wird als Zusammenhangskomponentenanalyse bezeichnet und überführt das Rasterbild nicht wiederum in ein anderes Rasterbild, sondern in eine qualitativ andersartige Datenstruktur. Dabei werden aus der Bildmatrix topologisch zusammenhängende Mengen schwarzer Pixel extrahiert, die sog. Zusammenhangskomponenten (Harberecker, "Digitale Bildverarbeitung", Hansa-Verlag München 1985, Seite 71 ff; Ballard, Brown:"Computer-Vision", -Vision", Prentice-Hall Englewood Cliffs, N.J. 1982, S. 235 ff). Dieser Verfahrensschritt hat sich für anspruchsvollere Aufgaben in der Binärbildverarbeitung allgemein durchgesetzt und wird auch zur Durchführung des erfindungsgemäßen Verfahrens benötigt. Dabei wird eine rechnerinterne Darstellung der Zusammenhangskomponenten mit Hilfe einer hierarchischen Datenstruktur verwendet. In ihr werden die Ränder eines Objektes (sowohl Außen- als auch Innenränder) ggf. in zwei verschiedenen Auflösungsstufen, den sog. Deskriptoren und Feinrändern, verwaltet. Außerdem ist die Enthaltensein-Relation von Innenrändern zu deren Außenrändern vermerkt. Diese Darstellung ermöglicht eine effiziente Berechnung von statistischen Merkmalen, die für die anschließend beschriebene Text-Graphiksegmentierung benötigt werden, sowie die Berechnung derjenigen Merkmale, die für eine Schriftzeichenerkennung erforderlich sind (L. Bernhardt, 1984, "Three Classical Character Recognition Problems, Three New Solutions" Siemens Forschungs- und Entwicklungsberichte 13, pp. 114-117). Aus der hierarchischen Datenstruktur und den in ihr repräsentierten Zusammenhangskomponenten ist eine vollständige Rekonstruktion des Rasterbildes möglich.

In einem typischen Papierdokument wie einem Geschäftsbrief sind im allgemeinen neben Textinformationen auch bildhafte Anteile vorhanden. Diese können z.B. das Firmenlogo sein, eine Geschäftsgraphik oder eine photographische Abbildung. Dokumentenanalyseverfahren müssen demnach in der Lage sein, Text, Graphik und Halbtonanteile eines Dokumentes voneinander zu unterscheiden, um sie getrennten Verarbeitungsschritten zuführen zu können. Postl hat ein Verfahren (Postl 1982) entwickelt, Halbtonbilder von den im wesentlichen schwarz/weiß vorliegenden Text- und Graphikteilen zu trennen, benötigt dazu aber die Grauwerte des abgetasteten Originals. Im Rahmen des erfindungsgemäßen Verfahrens wird ein Verfahren zur Textgraphiktrennung verwendet, das in der Lage ist, die Textklassifikation in binarisierten Dokumentenvorlagen größen- und weitgehend auch drehlagenunabhängig durchzuführen (W.Scherl, 1985, "Unified Analysis of Complex Document Patterns", Image Analysis, Proc. 4th Scand. Conf. on Image Analysis, Trondheim, Norway, pp. 873-880; W.Scherl, 1986, "Bildgraph, Stochastischhe Graphgrammatiken und Erkennungsskriterien zur Analyse allgemeiner Druckvorlagen", Dissertation, Universität Erlangen-Nürnberg). Dazu ist eine Kombination von statistischen Verfahren der Mustererkennung mit syntaktischen Ansätzen erforderlich.

Nach Ablauf dieser Vorverarbeitungsschritte ist das ursprüngliche Papierdokument abgetastet und binarisiert. Seine Drehlage relativ zu einer horizontalen Achse ist ggf. kompensiert, sodaß von einer achsenparallelen Ausrichtung des Dokumentes ausgegangen werden kann. Als Resultat einer Zusammenhangskomponentenanalyse und einer daran anschließenden Text-Graphik-Trennung liegen Text und Graphik sowie andere Teile des Dokumentes getrennt vor. An diese Vorverarbeitungsschritte muß sich ein Schritt zur Erkennung der Layoutstruktur anschliessen, bei welchem Dokumentobjekte zu größeren zusammengesetzten Einheiten gruppiert werden. Ein solcher Verarbeitungsschritt wird auch als Blocksegmentierung bezeichnet, und die Erfindung. betrifft ein Verfahren zur Segmentierung von Textblöcken in Layoutdokumenten.

In der Literatur sind verschiedene Verfahren zur Segmentierung von Layoutblöcken beschrieben.

Einige Verfahren, wie z.B. das Verfahren von Wong, Casey und Wahl (K.Y.Wong, R.G.Casey, F.M.Wahl, 1982, "Document Analysis System", IBM Journal of Research and Development 26, pp. 647-656) gehen vom binären Rasterbild aus und fassen mittels Projektionen, Unterabtastung oder Dilatation zunehmend größere Bildbereiche zusammen. Eine neuere Anwendung solcher Verfahren auf Textdokumente findet sich z.B. bei H.S. Baird, 1988, "Gobal-to-Local Layout Analysis", Proc. of the Workshop on Synt. and Struct. Pattern Recognition (Pont-à-Mousson), pp. 136-147). Solche Verfahren sind vergleichsweise empfindlich gegenüber Drehungen der Vorlage und der Wahl von Dilatationsparametern. So verwenden z.B. Rastogi und Srihari (A.Rastogi, S.N.Srihari, 1986, "Recognizing Textual Blocks in Document Images Using the Hough Transform, TR 86/01, Department of Computer Sience, State University of New York at Buffolo) die Houghtransformation um diese Parameter zu bestimmen. Die Ergebnisse dieses Verfahrens liegen ihrerseits in Form eines Rasterbildes vor, so daß etwaige Geometrieinformationen wie die Lage und Größe der gefundenen Blöcke in einem zusätzlichen Verfahrensschritt gewonnen werden müssen.

Nagy, Seth und Stoddard beschreiben ein Verfahren (G. Nagy, S.C. Seth, S.D. Stoddard, 1986, ,,Document Analysis with an Expert System, Pattern Recognition in Practice II (E.S. Gelsema, L.N. Kanal, eds.), North Holland, pp. 149-159), welches auf einer Lauflängenpräsentation des Dokumentbildes aufsetzt. Abhängig von der Zahl der Schwarz/Weiß-Übergänge in x- oder y-Richtung in einem Bereich wird ein vertikaler oder horizontaler Schnitt durch das Dokument gelegt, der damit diesen Bereich in zwei Unterblöcke teilt. Dieses Verfahren wird rekursiv angewandt, bis eine Seite bishin zu Zeilenblöcken segmentiert wurde. Dementsprechend werden zwei Lauflängen-Darstellungen des Dokuments benötigt: Eine mit den Lauf längen in horizontaler Richtung (die Standard-Darstellung), und eine zweite, bei der die vertikalen Lauflängen verwendet werden. Das Ergebnis dieses Verfahrens ist eine Datenstruktur (von den Autoren XY Baum genannt), die im wesentlichen die Koordinaten der Blockrechtecke enthält. Neben den oben angesprochenen Schwierigkeiten bei schräg eingestellten Dokumenten ist ein weiterer Nachteil dieses Verfahrens, daß zwei unterschiedliche Lauflängen des Rasterbildes benötigt werden.

Aus (J. Fisher, 10th International Conference on Pattern Recognition, Band 1, Atlantic City, S. 567-572, 16. Juni 1990) ist ein regelbasiertes System zur Segmentierung eines Dokuments bekannt. Dieses System basiert wiederum auf einer Lauflängenrepräsentation des Dokumentbildes, so daß zwei unterschiedliche Lauflängen des Rasterbildes benötigt werden. Somit weist das System den Nachteil auf, daß die Segmentierung relativ langsam erfolgt.

Aus (K. Kise, Visiting Card Understanding System, 9th International Conference on Pattern Recognition, Band 1, Rom, S. 425-429, 14. November 1988) ist es bekannt, im Rahmen eines Dokumentenmodells in einem "Top-Down"-Ansatz den logischen Inhalt einer Visitenkarte in einer hierarchischen Datenstruktur zu beschreiben.

Aus (Y. Tsuji, Document Image Analysis for Generating Syntactic Structure Description, 9th International Conference on Pattern Recognition, Band 2, Rom, S. 744-747, 14. November 1988) ist es bekannt, ein Dokument zeilenweise zu unterteilen und auf Basis dieser zeilenweise Unterteilung den Text hierarchisch in einer Datenstruktur zu beschreiben, ausgehend von dem Text, zu den Zeilen und den einzelnen Buchstaben des Textes.

Aus EP 0206 214 A1 ist ein Verfahren zur einheitlichen symbolischen Beschreibung von Dokumentenmustern in Form von Datenstrukturen in einem Automaten bekannt, bei dem Innen- und Außenränder von Bildanteilen im Rahmen einer hierarchischen Datenstruktur gespeichert werden.

Der Erfindung liegt die Aufgabe zugrunde, ein Verfahren zur rechnergestützten Verarbeitung binärer Rasterbilder, insbesondere zur Segmentierung des Layouts von Dokumenten anzugeben, welches die oben beschriebenen Nachteile der aus der Literatur bekannten Verfahren überwindet. Diese Aufgabe wird mit Hilfe eines Verfahrens zur rechnergestützten Verarbeitung binärer Rasterbilder, insbesondere zur Segmentierung des Layouts von Dokumenten mit Merkmalen nach Anspruch 1 gelöst.

Dieses Verfahren zeichnet sich durch große Flexibilität und Robustheit aus, ist dabei aber nicht von einem speziellen Dokumentmodell abhängig.

In einem ersten Verfahrensschritt werden aus einem binären Rasterbild topologisch zusammenhängende Mengen schwarzer Pixel,
welche als Zusammenhangskomponenten bezeichnet werden, extrahiert. Diese Zusammenhangskomponenten werden rechnerintern mit Hilfe einer hierarchischen Datenstruktur repräsentiert, in welcher Innen- und Außenränder zusammen mit statistischen Merkmalen dieser Zusammenhangskomponenten dargestellt werden. Anhand von statistischen Merkmalen der Zusammenhangskomponenten werden diese als zum Texttyp oder als nicht zum Texttyp wie z.B. zum Graphiktyp gehörig klassifiziert. Die Zusammenhangskomponenten vom Texttyp werden daraufhin in Abhängigkeit von ihren horizontalen und vertikalen Abständen von benachbarten Zusammenhangskomponenten oder Textblöcken zu Textblöcken zusammengefaßt. Die so gebildeten Textblöcke werden anhand einer Statistik über Merkmale der sie konstituierenden Zusammenhangskomponenten einer Plausibilitätsprüfung unterworfen und bei negativem Verlauf dieser Plausibilitätsprüfung resegmentiert, wobei die betroffenen Textblöcke verworfen werden. Textblöcke werden wiederholt aufgebaut und resegmentiert bis die Plausibilitätsprüfung positiv verläuft. Diese Vorgehensweise wird innerhalb der Textblöcke zum Aufbau von mehrkomponentigen Buchstaben und anschließend zum Aufbau von Zeilen und innerhalb der Zeilen zum Aufbau von Worten angewendet.

Für die Bildung von Wörtern, Zeilen und Textblöcken geht dieses Verfahren von einer objektorientierten Darstellung des zu analysierenden Dokuments aus, bei welcher Zusammenhangskomponenten als zum Texttyp bzw. nicht zum Texttyp gehörig klassifiziert sind. Dies hat den Vorteil, daß mit abstrakt repräsentierten Bild komponenten und damit reduzierten Datenmengen gearbeitet werden kann. Um die Segmentierung möglichst robust zu machen, wird dabei zunächst nach den größten und damit am eindeutigsten definierten Strukturen, den Textblöcken, gesucht, um erst danach innerhalb der Textblöcke Zeilen und Wörter aufzubauen.

Beim Aufbau zusammengesetzter Objekte wird dabei jeweils das gleiche Prinzip verwendet:
Es werden diejenigen Objekte zu einer Einheit zusammengefaßt, deren Abstand voneinander einen bestimmten Wert nicht überschreitet. Genauer: Jede Zusammenhangskomponente, deren horizontaler und vertikaler Abstand dx bzw. dy von dem gerade zu bildenden zusammengesetzten Objekt kleiner als ein bestimmter Grenzwert Dx bzw. Dy ist, wird als neues Teil dieses Objekts betrachtet. Dabei wird der Abstand von Zusammenhangskomponenten als der Abstand der gegenüberliegenden Seiten der sie umschreibenden Rechtecke definiert. Die Grenzwerte oder Schwellwerte Dx bzw. Dy hängen dabei natürlich von der Art des zu bildenden Objekts ab sowie von einem geeignet zu wählenden Normierungsfaktor, welcher die vom konkreten Dokumentbild abhängigen Einflüsse subsummiert.

Durch diese Vorgehensweise ist das Verfahren wesentlich weniger empfindlich gegenüber einer Rotation der Vorlage als die aus der Literatur bekannten Verfahren. Es setzt nicht direkt auf einer rasterbildartigen Beschreibung des Dokuments auf und benötigt insbesondere keine Lauflängendarstellungen des Dokumentbildes.

Vorteilhafte Weiterbildungen der Erfindung ergeben sich aus den Unteransprüchen.

Figur 1 zeigt eine graphische Darstellung der hierarischen Datenstruktur, in welcher die Zusammenhangskomponenten und die aus ihnen zusammengesetzten Objekte sowie die Information über den internen Aufbau dieser Objekte aus den Zusammenhangskomponenten abgespeichert wird.

Figur 2 zeigt einen Textblock in einer Dokumentvorlage als Binärbild.

Figur 3 zeigt eine Zerlegung dieses Textblocks in Zusammenhangskomponenten.

Figur 4 zeigt die Segmentierung des Textblockes innerhalb des Dokumentes.

Figur 5 zeigt die Segmentierung von zusammengesetzten Buchstaben.

Figur 6 zeigt die Segmentierung einzelner Zeilen innerhalb des Textblockes.

Figur 7 zeigt die Segmentierung von Worten innerhalb von Zeilen.

Figur 8 zeigt die Art der Abstandsmessung zwischen Zusammenhangskomponenten.

Figur 9 zeigt ein Testdokument für den Segmentierungsvorgang mit folgenden Komplikationen im Layout der Textblöcke (von oben nach unten):
a) variabler Zeilenabstand
b) variable Buchstabenbreite
c) variable Buchstabengröße
d) variable Schrägelage

Figur 10 zeigt das Ergebnis der Segmentierung für das Testdokument aus Figur 9.

In Tabelle 1 ist ein grundsätzlicher Verfahrensablauf des erfindungsgemäßen Verfahrens mit Hilfe einer Pseudocodedarstellung wiedergegeben.

Tabelle 2 enthält die Werte typischer Parameter zur Durchführung der Layout Segmentierung.

Im folgenden wird die Erfindung anhand eines bevorzugten Ausführungsbeispieles und anhand der Figuren beschrieben.

Der erste Verarbeitungsschritt zur Analyse eines Dokuments besteht im Abtasten der Papiervorlage. Dazu wird vorzugsweise ein Flachbettscanner oder eine Kamera verwendet. Bei der Abtastung oder im Anschluß an die Abtastung des Dokuments wird dieses binarisiert. Üblich ist eine globale Schwellwertbildung, die allen Pixeln, deren Abtastwerte oberhalb der Schwelle liegen, einen Wert von 1 für z.B. schwarz bzw. Vordergrund zuordnet und den anderen Pixeln den Hintergrundwert von Null zuweist. Dieses Verfahren setzt eine gleichmäßige Beleuchtung und eine von der Farbverteilung her homogene Vorlage voraus, was im Falle von Dokumenten, welche aus schwarzbedrucktem weißem Papier bestehen und einer Abtastung mit einem Scanner mit integrierter Beleuchtung im allgemeinen gegeben ist. Sind diese Voraussetzungen nicht erfüllt, muß stattdessen eine adaptive Schwellwertbildung vorgenommen werden. Dabei wird die Helligkeitsgrenze zwischen Vorder- und Hintergrund von der mittleren Helligkeit in der Umgebung des betrachteten Bildpunktes abhängig gemacht.

Wird die Vorlage nicht exakt achsenparallel in den Scanner eingelegt oder ist die Aufnahmekamera gegenüber der Vorlage verdreht, so muß das Rasterbild des Dokuments vor der weiteren Verarbeitung algorithmisch rotiert werden. Dafür existieren Verfahren, die in der Lage sind, die Vorzugsschreibrichtung einer Vorlage auf mehrere Bogenminuten genau zu bestimmten und das Rasterbild parallel zur horizontalen Achse auszurichten (Postl 1982, Trincklin 1984, Baird 1987, Dengel und Schweitzer 1989). Einige der im folgenden zu beschreibenden weitergehenden Verfahrensschritte sind jedoch entweder von der Drehlage eines Dokumentbildes weitgehend unabhängig oder sind in der Lage auch leicht, d.h. um 2 bis 3° verdrehte Vorlagen zu bearbeiten.

In einem weitergehenden Verarbeitungsschritt, bei dem das Rasterbild erstmalig nicht wiederum in ein anderes Rasterbild umgewandelt wird, sondern bei welchem eine qualitativ neue Datenstruktur entsteht, ist die Zusammenhangskomponentenanalyse. Dabei werden aus der Bildmatrix die topologisch zusammenhängenden Mengen schwarzer Pixel extrahiert, die sog.

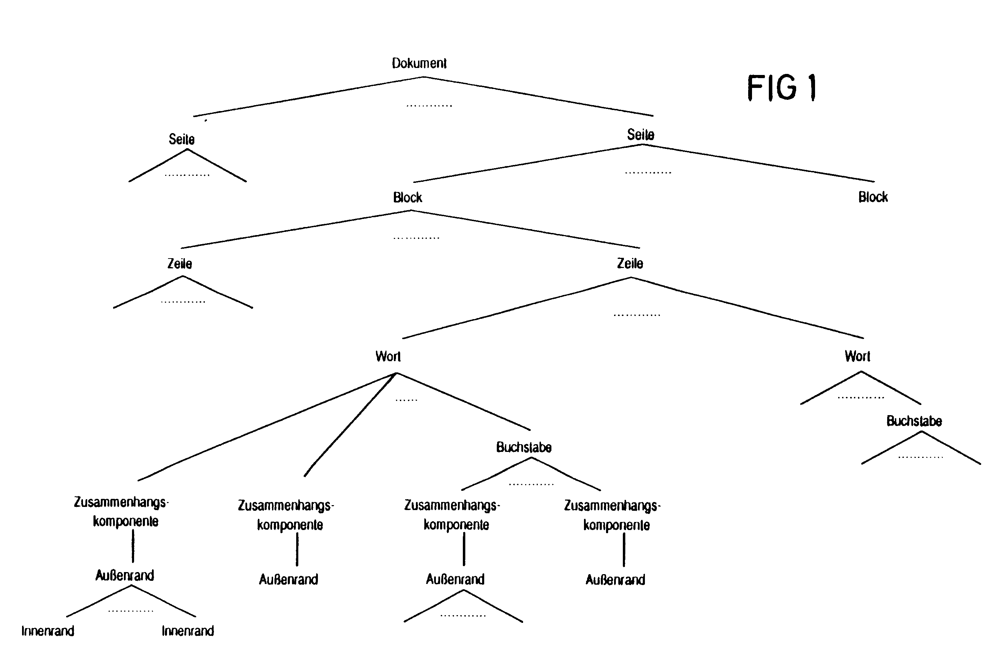

Zusammenhangskomponenten Z (Haberecker 1985, Ballard und Brown, 1982). Dieser Verfahrensschritt hat sich für anspruchsvollere Aufgaben in der Binärbildverarbeitung allgemein durchgesetzt. Im Rahmen des hier beschriebenen Verfahrens wird zur rechner internen Repräsentation der Zusammenhangskomponenten Z eine hierarchische Datenstruktur verwendet, wie sie in Figur 1 dargestellt ist. In ihr werden die Ränder eines Objektes (sowohl Außen- als auch Innenränder) in zwei verschiedenen Auflösungsstufen, den sog. Deskriptoren und Feinrändern, verwaltet. Außerdem ist die Enthaltensein-Relation von Innenrändern zu deren Außenrändern vermerkt. Diese Darstellung ermöglicht eine effiziente Berechnung von statistischen Merkmalen, die für die im nächsten Punkt beschriebene Text-Graphik-Klassifikation benötigt werden, sowie die Berechnung derjenigen Merkmale, die für eine Schriftzeichenerkennung nach dem Winkelschnittverfahren erforderlich sind (L.Bernhardt 1984). Aus dieser hierarchischen Datenstruktur kann das ursprüngliche Rasterbild vollständig rekonstruiert werden.

In einem typischen Papierdckument, wie einem Geschäftsbrief, sind im allgemeinen neben Textinformationen auch bildhafte Anteile vorhanden. Diese können z.B. das Firmenlogo sein, eine Gschäftsgraphik oder eine photographische Abbildung. Dokumentanalyseverfahren müssen demnach in der Lage sein, Text, Graphik und Halbtonanteile eines Dokuments voneinander zu unterscheiden, um sie getrennten Bearbeitungsschritten zuführen zu können. Postl 1982 hat ein Verfahren entwickelt, mit dem Halbtonbilder von im wesentlichen schwarz/weiß vorliegenden Text- und Graphikanteilen getrennt werden können. Dabei werden aber die Grauwerte des abgetasteten Originals benötigt. Das hier beschriebene Verfahren benutzt stattdessen eine Methode, welche in der Lage ist, die Textklassifikation in bereits binarisierten Vorlagen, welche also keine Grauwertinformation mehr enthalten, weitgehend unabhängig von der Größe des Dokuments und von seiner Drehlage durchzuführen. Dieses Verfahren ist in den Veröffentlichungen von Scherl, 1985, 1986 detailliert beschrieben. In ihnen werden statistische Methoden der Mustererkennung mit syntaktischen Ansätzen kombiniert.

Die Nachbarschaftsbeziehung zwischen Zusammenhangskomponenten Z wird dabei ausgenutzt, um ein syntaktisches Merkmal zu bilden, nämlich deren lineare Anordnung. Liegen mehrere benachbarte Zusammenhangskomponenten vergleichbarer Größe auf einer Geraden, welche eine beliebige Richtung haben kann und sind sie außerdem genügend nahe zusammen, so werden sie zu einem neuen Objekt, einem sog. Wort, zusammengefaßt. Die Text-Graphik-Klassifikation basiert auf diesen Worten, welche quasi die erste Stufe einer expliziten Darstellung der inhärenten Nachbarschaftsbeziehungen, also der syntaktischen Struktur eines Dokuments sind.

Der eigentliche Klassifikationsschritt basiert auf 13 statistischen Merkmalen, die aus den Worten im obigen Sinne errechnet werden. Durch die ausgewählten Merkmale können die Objekte unabhängig von ihrer Größe und weitgehend unabhängig von ihrer Drehlage beschrieben werden. Sie sind jedoch rein heuristisch gefunden und nicht weiter optimiert. Im einzelnen handelt es sich um folgende Merkmale:
- die Anzahl der Zusammenhangskomponenten im Wort;
- die aufsummierte Länge aller Innenränder, die sich im Wort befinden;
- die Autokorrelationskoeffizienten der Richtungsverteilung der Außenränder der Wortteile;
- der sog. Extremwertwinkel;
- das Minimum von Mittelwert und Streuung der Projektionen des Wortbildes in vier verschiedene Richtungen (0°, 45°, 90° und 135°);
- das Verhältnis der Gesamtfläche der Schwarzkomponenten eines Wortes zu der Fläche einer Polygonapproximation seiner konvexen Hülle.

Eine detaillierte Beschreibung der Merkmale und des Ablaufs der Text-Graphikklassifikation findet sich in den Veröffentlichungen von Scherl (Scherl 1985, 1986).

Damit ist die Vorverarbeitung des Binärbilddokumentes, auf welcher das erfindungsgemäße Verfahren aufbaut, abgeschlossen. Das Dokument liegt in einer hierarchischen Datenstruktur vor, in welcher das Dokument mit Hilfe von Zusammenhangskomponenten Z und ihrer statistischen Merkmale repräsentiert ist. Aus dieser Darstellung kann das Dokument ohne jeden Informationsverlust vollständig als Binärbild rekonstruiert werden. Im folgenden wird nun die eigentliche Layout-Segmentierung beschrieben. In dieser Beschreibung wird die Bezeichnung Wort in einer anderen Bedeutung verwendet als zur vorangehenden Beschreibung der Text-Graphik-Trennung. Ein Wort im Sinne der Layout-Segmentierung, wie sie im folgenden beschrieben wird, kann daher, aber muß nicht mit einem Wort im Sinne des Verfahrens zur TextGraphiktrennung identisch sein.

Für die Bildung von Worten, Zeilen und Textblöcken geht das Verfahren von einer objektorientierten Darstellung des Dokuments in Form von nach Text- bzw. Graphikzugehörigkeit klassifizierten Zusammenhangskomponenten Z aus. Dies hat den Vorteil, daß mit abstrakt repräsentierten Bildkomponenten und damit reduzierten Datenmengen gearbeitet werden kann. Um die Segmentierung möglichst robust zu machen, werden zunächst die größten und am eindeutigsten definierten Strukturen, die Textblöcke, gesucht, um erst danach innerhalb dieser Textblöcke Zeilen und Wörter aufzubauen. Beim Aufbau von zusammengesetzten Objekten wird jeweils das gleiche Prinzip verwendet: Es werden diejenigen Objekte zu einer Einheit zusammengefaßt, deren Abstand voneinander einen bestimmten Wert nicht überschreitet. Genauer: Jede Zusammenhangskomponente, deren horizontaler und vertikaler Abstand dx bzw. dy von dem gerade zu bildenden zusammengesetzten Objekt kleiner als ein bestimmter Grenzwert Dx bzw. Dy ist wird als neues Teil dieses Objektes betrachtet.

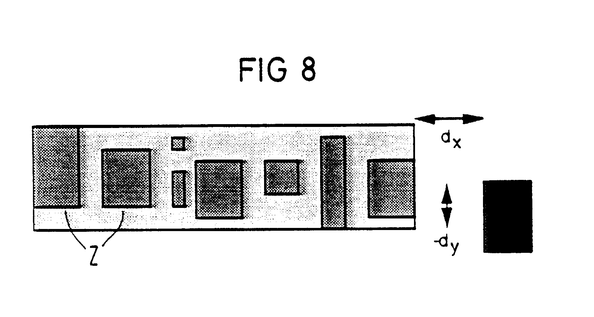

Dabei wird der Abstand von Zusammenhangskomponenten Z als der Abstand der gegenüberliegenden Seiten der sie umschreibenden Rechtecke definiert (Figur 8). Die Schwellwerte oder Grenzwerte Dx bzw. Dy hängen natürlich von der Art des zu bildenden Objekts (Textblock, Zeile, Wort) ab sowie von einem geeignet zu wählenden Normierungsfaktor s, welcher die vom konkreten Dokumentbild abhängigen Einflüsse erfaßt. Die Schwellwerte Dx bzw. Dy ergeben sich dabei als Produkte aus einem nicht richtungsabhängigen Normierungsfaktor s und einem jeweils für die x- bzw. y-Richtung im allgemeinen verschieden zu wählenden Parameter cx bzw.cy, wobei typische Werte für den Normierungsfaktor s und die Parameter cx bzw. cy in Tabelle 2 zusammengefaßt sind. Die so gebildeten Layout-Objekte können mit einfachen Verfahren auf ihre Plausibilität hin überprüft werden und bei Bedarf, d.h. bei negativem Verlauf dieser Plausibilitätsprüfung einer Resegmentierung unterworfen werden. So sollte z.B. die Varianz der Zeichenhöhe innerhalb eines Textblockes nicht zu groß sein. Ist dies der Fall, kann der Textblock aufgelöst werden, und der Segmentierungsschritt mit neuen und besser an die Verhältnisse des Dokumentsbereichs angepaßten Parametern wiederholt werden. Resegmentierungsschritte werden solange wiederholt, bis die Plausibilitätsprüfung auf dieser Ebene positiv verläuft. 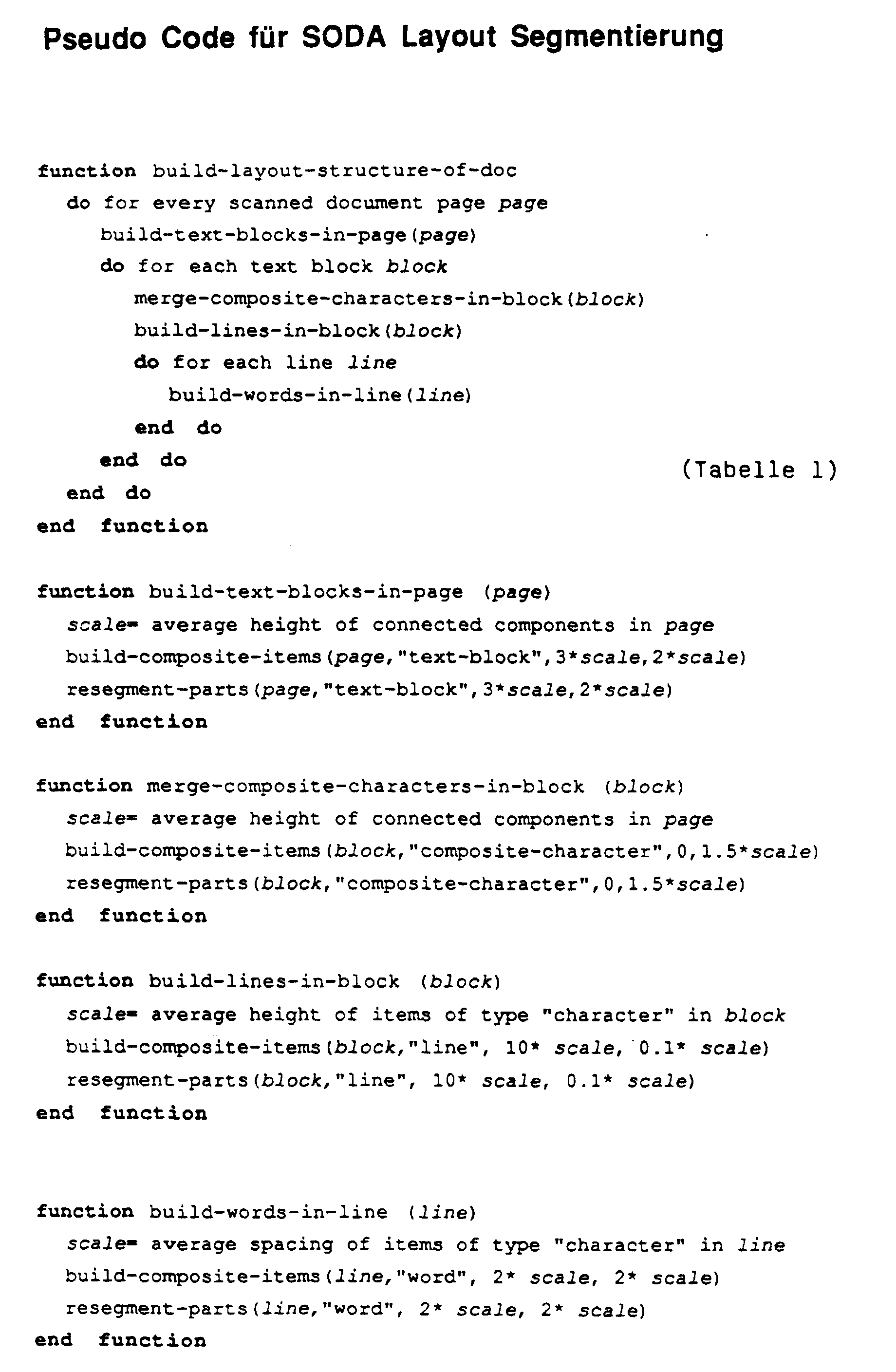 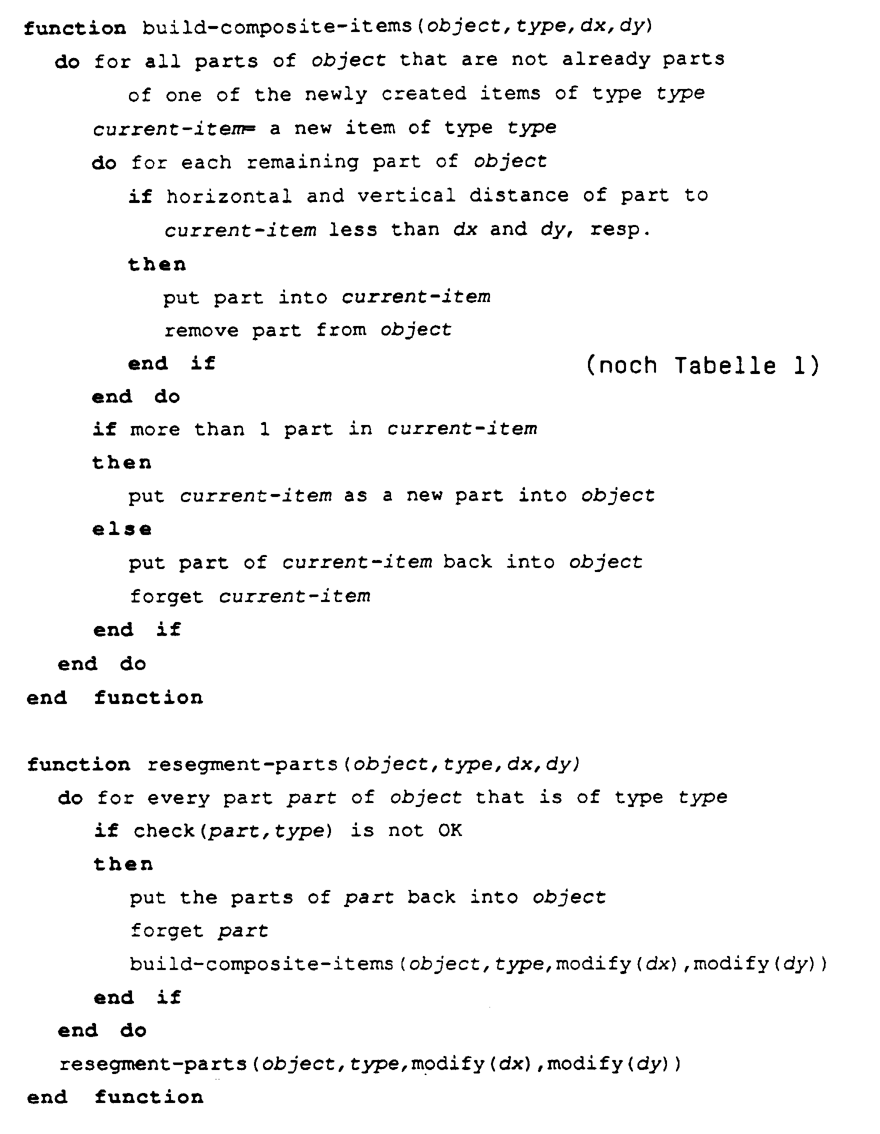 Tabelle 1 zeigt eine allgemeine Formulierung des Layout-Segmentierungsverfahrens mit Hilfe einer Pseudocode-Darstellung.

**Tabelle 2:**

| Parameter des Verfahrens zur Layoutsegmentierung | | | |
|---|---|---|---|
| zu bildendes Layoutobjekt | horizontaler Abstand cx | vertikaler Abstand cy | Normierungsparameter s |
| Textblock | 3.0 | 2.0 | mittlere Zeichenhöhe der Seite |
| Zeile | 3.0 | 0.1 | mittlere Zeichenhöhe im Textblock |
| Wort | 2.0 | 2.0 | mittlerer Buchstabenabstand in der Zeile |

Um die als Text klassifizierten Zusammenhangskomponenten zu Textblöcken TB zusammenzufassen, werden Grenzwerte Dx und Dy gewählt, die von der Größe der im Dokument vorkommenden Buchstaben abhängen. Als Normierungsfaktor s wird also die über die ganze Seite ermittelte Höhe der Zusammenhangskomponenten Z vom Texttyp gewählt. Für cx und cy haben sich bei Experimenten Werte von 3 bzw. 2 als geeignet erwiesen. Zusammenhangskomponenten, welche dieses Abstandskriterium erfüllen, d.h. deren Abstände kleiner als die mit Hilfe des Normierungsparameters s und mit Hilfe der Parameter cx bzw. cy berechneten Schwellwerte unterschreiten, werden in einer Liste gesammelt und in der Datenstruktur die den Textblock TB repräsentiert vermerkt. Da Textblöcke TB in einem Dokument gut voneinander abgrenzbar sind, ist die Erkennung allein durch die geometrische Nachbarschaftsbeziehung robust in dem Sinne, daß die Wahl des Abstandsparameters und die Genauigkeit der mittleren Zeichengröße unkritisch ist. Es werden also auch Textblöcke TB mit unterschiedlicher Schriftgröße voneinander getrennt. Eine Resegmentierung ist deshalb im allgemeinen nicht erforderlich.

Nach dem Textblöcke gefunden sind, werden innerhalb dieser Textblöcke Zeilen ZS segmentiert. Dies geschieht ebenfalls über ein Abstandskriterium von der oben verwendeten Art. Bei der Zeilensegmentierung werden jedoch im allgemeinen für cx und cy Werte von 3 bzw. 0,1 gewählt. Als Normierungsparameter s wird wieder die mittlere Zeichenhöhe, diesmal aber speziell innerhalb des betrachteten Textblocks und nicht über die gesamte Dokumentseite gemittelt berechnet. Bei der Zeilensegmentierung reagiert das Verfahren sehr viel empfindlicher auf eine genaue Wahl der Abstandsparameter, sodaß unter Umständen eine Resegmentierung erforderlich wird und zum anderen die mittlere Zeichenhöhe genau bestimmt werden muß. Dazu werden zunächst Zusammenhangskomponenten, die zu mehrkomponentigen Zeichen, wie z.B. Umlauten oder Buchstaben wie i etc. gehören, zu einem logischen Zeichen (zusammengesetzten Buchstaben) zusammengesetzt. Bei dieser Zusammensetzung von mehrkomponentigen Buchstaben ZB zu einem logischen Zeichen wird in der gleichen Weise vorgegangen wie bei der Zusammensetzung von Zusammenhangskomponenten Z zu Objekten anderer Ebenen. Die folgende erneute Berechnung der mittleren Zeichenhöhe innerhalb eines jeden Textblockes wird jetzt nicht mehr durch z.B. i-Punkte, die ja zunächst nicht von anderen Textkomponenten unterschieden werden können, verfälscht. Die Zusammenfassung der Buchstaben eines Textblockes zu Zeilen wird dadurch zuverlässiger. Da die Zusammenfassung von mehrkomponentigen Buchstaben ZB zu einem logischen nur dazu dienen soll, die mittlere Zeilenhöhe genauer zu bestimmen, wird von dieser Zusammensetzung nicht verlangt, alle möglichen Fälle richtig zu behandeln.

Trotz der besseren Bestimmung des Normierungsfaktors kommt es vor, daß zwei oder mehr Zeilen zu einer einzigen zusammengefaßt werden. In diesem Fall ist eine Resegmentierung der Zeilen nötig. Dazu wird die Höhe der erzeugten Zeile überprüft. Ist sie größer als die doppelte Zeichenhöhe innerhalb der fehlerhaft segmentierten Zeile, so wird diese Zeile aufgelöst und die Zeilensegmentierung innerhalb des betreffenden Textblockes erneut durchgeführt. Dabei wird allerdings ein verkleinerter Wert für den Parameter cy verwendet. Die anderen Zeilen innerhalb des Textblockes bleiben davon unberührt. Dieser Vorgang wird sooft wiederholt, bis eine "vernünftige" Zeile ZS entstanden ist.

Die Zusammenfassung der Buchstaben einer Zeile zu Wörtern WS erfolgt analog, nur daß hier als Normierungsparameter s für das Abstandsmaß nicht die Zeichenhöhe, sondern der mittlere Abstand von Buchstaben untereinander innerhalb der betreffenden Zeile verwendet wird.

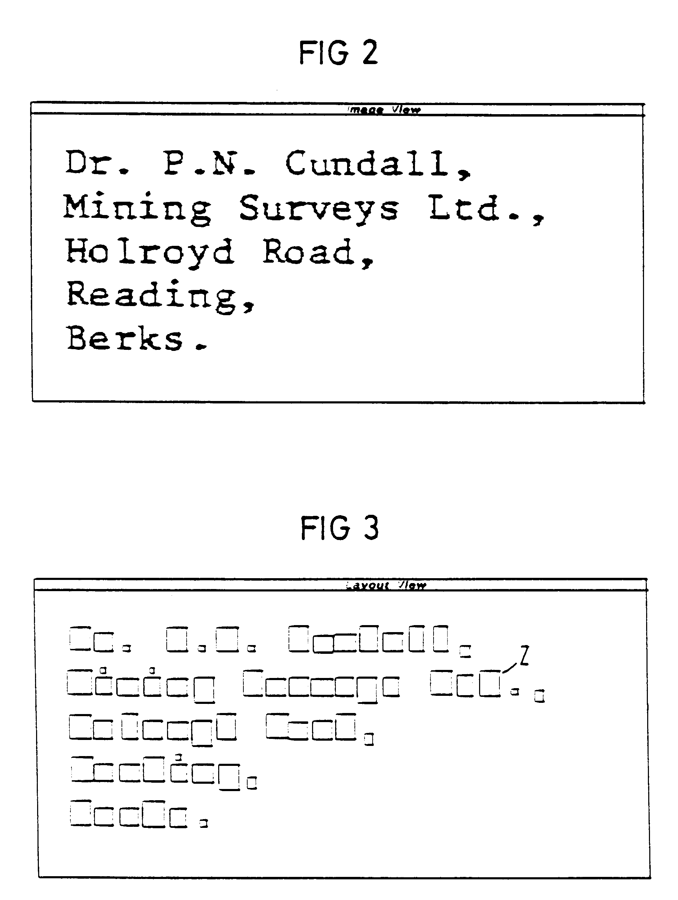

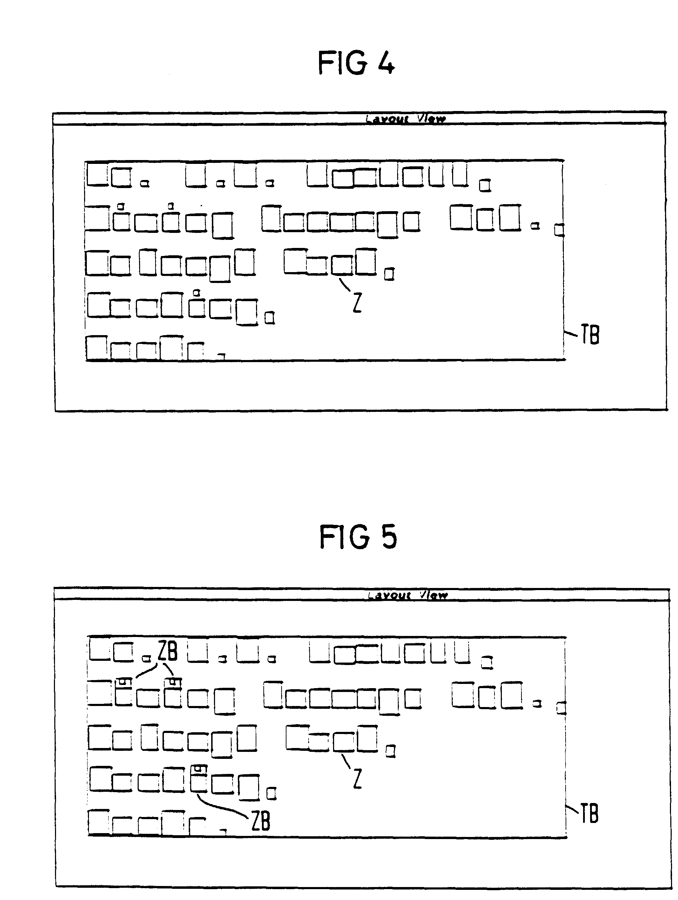

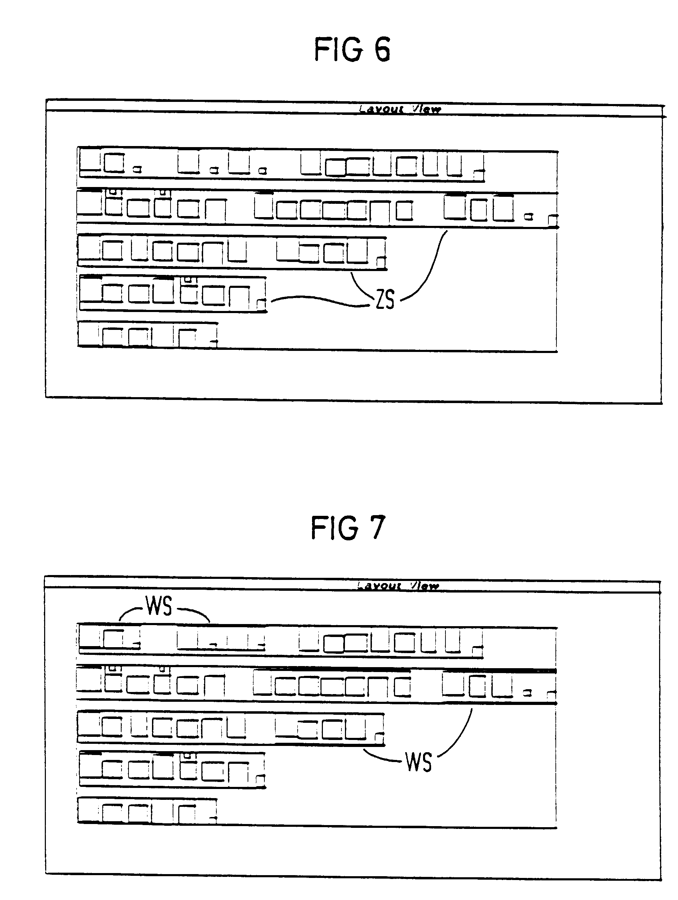

Der Ablauf des Layout-Segmentierungsverfahrens und die dabei entstehenden Segmentierungsergebnisse sind in den Figuren 2, 3, 4, 5, 6 und 7 anschaulich dargestellt. Figur 2 zeigt einen Textblock TB einer Dokumentvorlage als Binärbild. Figur 3 zeigt die Segmentierung dieses Textblockes in einzelne Zusammenhangskomponenten Z, d.h. in topologisch zusammenhängende Mengen schwarzer Pixel. Es ist deutlich zu sehen, daß beispielsweise i-Punkte von den Rumpfteilen dieses Buchstabens noch getrennt sind. Dieses Ergebnis wird damit der Definition von Zusammenhangskomponenten Z gerecht. Figur 4 zeigt das Ergebnis der Textblocksegmentierung, bei dem zu erkennen ist, daß der Absatz zutreffend segmentiert wurde, indem das diesen Absatz einhüllende Rechteck TB gefunden wurde. Figur 5 zeigt das segmentierte Layout, nach dem aus mehreren Zusammenhangskomponenten bestehende Buchstaben zu zusammengesetzten Buchstaben zusammengesetzt worden sind. In dieser Figur sind demnach die i-Punkte zusammen mit den Rumpfteilen dieses Buchstabens zu einem Segment verschmolzen. Figur 6 zeigt das Ergebnis der Zeilensegmentierung. Figur 7 zeigt schließlich die Segmentierung der Zeilen ZS in einzelne Worte WS.

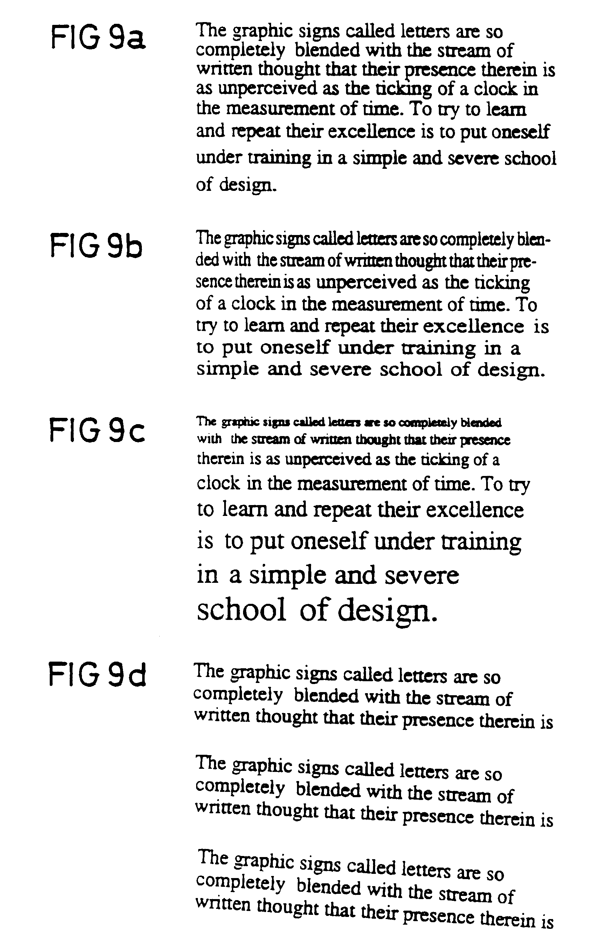

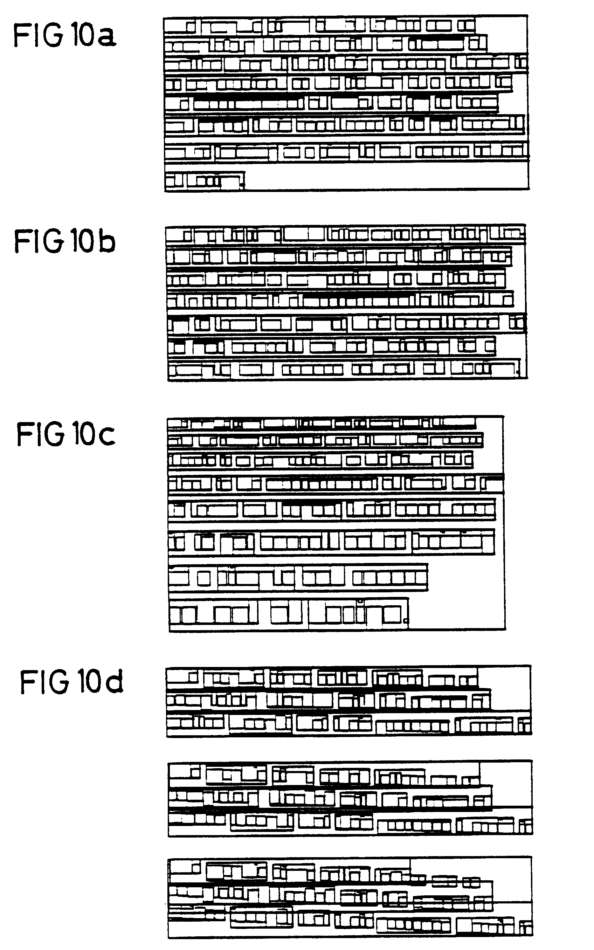

Die Figuren 9 und 10 zeigen die Ergebnisse des Verfahrens zur Layout-Segmentierung bei verschiedenen Dokumentvorlagen. Aus diesen Figuren kann entnommen werden, daß das Verfahren zur Layout-Segmentierung hinreichend robust gegen Drehungen der Dokumentvorlage, schwankende Zeilenabstände sowie unheitliche Buchstabengrößen ist.

## Patentansprüche

1. Verfahren zur Verarbeitung binärer Rasterbilder, insbesondere zur Segmentierung des Layouts von Dokumenten mit folgenden Schritten:
a) aus einem binären Rasterbild werden topologisch zusammenhängende Mengen schwarzer Pixel, die Zusammenhangskomponenten (Z) extrahiert;
b) die Zusammenhangskomponenten (Z) werden mit Hilfe einer hierarchischen Datenstruktur repräsentiert, in welcher Innen- und Außenränder zusammen mit statistischen Merkmalen von Zusammenhangskomponenten (Z) dargestellt werden;
c) statistische Merkmale der Zusammenhangskomponenten (Z) werden dazu verwendet, diese als zum Text-Typ bzw. zu einem anderen, z.B. zum Graphik-Typ gehörig zu klassifizieren;
d) Zusammenhangskomponenten vom Text-Typ oder aus diesen zusammengesetzte Objekte werden in Abhängigkeit von ihren statistischen Merkmalen zu Textblöcken zusammengefaßt und in der hierarchischen Datenstruktur gespeichert, wobei der Aufbau der Textblöcke aus Zusammenhangskomponenten ebenfalls in der hierarchischen Datenstruktur gespeichert wird.

2. Verfahren nach Anspruch 1, bei dem Zusammenhangskomponenten auf folgende Weise zu Objekten zusammengefaßt werden:
a) die Zusammenhangskomponenten vom Text-Typ werden in Abhängigkeit von ihren horizontalen und vertikalen Abständen von benachbarten Zusammenhangskomponenten oder Textblöcken zu Textblöcken (TB) zusammengefaßt;
b) die so gebildeten Textblöcke (TB) werden anhand einer Statistik über Merkmale der sie konstituierenden Zusammenhangskomponenten (Z) einer ersten Plausibilitätsprüfung unterworfen und bei negativem Verlauf dieser ersten Plausibilitätsprüfung einer Resegmentierung unterzogen, welche die betroffenen Textblöcke (TB) verwirft;
c) Textblöcke (TB) werden wiederholt aufgebaut und resegmentiert bis die erste Plausibilitätsprüfung positiv verläuft;
d) innerhalb der Textblöcke werden Zusammenhangskomponenten (Z) in Abhängigkeit von ihren horizontalen und vertikalen Abständen und ihrem Größenverhältnis zu benachbarten Zusammenhangskomponenten (Z) zu mehrkomponentigen Buchstaben (ZB) zusammengefaßt;
e) die so gebildeten Buchstaben werden anhand einer Statistik über Merkmale der sie konstituierenden Zusammenhangskomponenten einer zweiten Plausibilitätsprüfung unterworfen und bei negativem Verlauf dieser zweiten Plausibitätsprüfung einer Resegmentierung unterzogen, welche die betroffenen Buchstaben verwirft;
f) Buchstaben werden wiederholt gebildet und resegmentiert bis die zweite Plausibilitätsprüfung positiv verläuft;
g) innerhalb der Textblöcke (TB) werden Zusammenhangskomponenten (Z) und mehrkomponentige Buchstaben (ZB) in Abhängigkeit von ihren horizontalen und vertikalen Abständen zu benachbarten Zusammenhangskomponenten, mehrkomponentigen Buchstaben oder Textzeilen desselben Textblockes zu Textzeilen (ZS) zusammengefaßt;
h) die so gebildeten Textzeilen (ZS) werden anhand einer Statistik über Merkmale der sie konstituierenden Zusammenhangskomponenten (Z) und mehrkomponentigen Buchstaben (ZB) einer dritten Plausibilitätsprüfung unterworfen und bei negativem Verlauf dieser dritten Plausibilitätsprüfung einer Resegmentierung unterzogen, welche die betroffenen Textzeilen (ZS) verwirft;
i) Textzeilen (ZS) werden wiederholt aufgebaut und resegmentiert bis die dritte Plausibilitätsprüfung positiv verläuft;
j) innerhalb der Textzeilen (ZS) werden Zusammenhangskomponenten (Z) und mehrkomponentige Buchstaben (ZB) in Abhängigkeit von ihren horizontalen und vertikalen Abständen zu benachbarten Zusammenhangskomponenten, mehrkomponentigen Buchstaben oder Worten (WS) derselben Textzeile zu Worten zusammengefaßt;
k) die so gebildeten Worte (WS) werden anhand einer Statistik über Merkmale der sie konstituierenden Zusammenhangskomponenten (Z) oder mehrkomponentigen Buchstaben (ZB) einer vier ten Plausibilitätsprüfung unterworfen und bei negativem Verlauf dieser vierten Plausibilitätsprüfung einer Resegmentierung unterzogen, welche die betroffenen Worte (WS) verwirft;
l) Worte (WS) werden wiederholt gebildet und resegmentiert bis die vierte Plausibilitätsprüfung positiv verläuft.

3. Verfahren nach einem der vorherigen Ansprüche, bei dem die Zusammenhangskomponenten vom Text-Typ oder aus diesen zusammengesetzte Objekte in Abhängigkeit von ihren Lagen zu Objekten zusammengefaßt werden.

4. Verfahren nach einem der vorherigen Ansprüche, bei dem die Zusammenhangskomponenten vom Text-Typ oder aus diesen zusammengesetzte Objekte in Abhängigkeit von ihren Größen zu Objekten zusammengefaßt werden.

5. Verfahren nach einem der vorherigen Ansprüche, bei dem die Zusammenhangskomponenten vom Text-Typ oder aus diesen zusammengesetzte Objekte in Abhängigkeit von ihren Abständen zu anderen Zusammenhangskomponenten oder Objekten zu Objekten zusammengefaßt werden.

## Claims

1. A method for processing binary halftone images, especially for segmenting the layout of documents, comprising the following steps:
a) from a binary halftone image, topologically contiguous sets of black pixels, the connection components (Z), are extracted;
b) the connection components (Z) are represented with the aid of a hierarchical data structure in which inner and outer edges together with statistical features of connection components (Z) are represented;
c) statistical features of the connection components (Z) are used for classifying these as belonging to the text type or, respectively, to another type, for example to the graphics type;
d) connection components of the text type or objects composed of these are combined to form text blocks in dependence on their statistical features and are stored in the hierarchical data structure, the structure of the text blocks from connection components also being stored in the hierarchical data structure.

2. The method according to Claim 1, in which connection components are combined to form objects in the following manner:
a) the connection components of the text type are combined to form text blocks (TB) in dependence on their horizontal and vertical distances from adjacent connection components or text blocks;
b) the text blocks (TB) formed in this manner are subjected to a first plausibility check by means of statistics on features of the connection components (Z) of which they consist and, if this first plausibility check has a negative result, are subjected to resegmenting which discards the text blocks (TB) affected;
c) text blocks (TB) are repeatedly built up and resegmented until the first plausibility check has a positive result;
d) within the text blocks, connection components (Z) are combined to form multicomponent letters (ZB) in dependence on their horizontal and vertical distances and their size relationship with respect to adjacent connection components (Z);
e) the letters thus formed are subjected to a second plausibility check by means of statistics on features of the connection components of which they consist and if this second plausibility check has a negative result, are subjected to resegmenting which discards the letters affected;
f) letters are repeatedly formed and resegmented until the second plausibility check has a positive result;
g) within the text blocks (TB), connection components (Z) and multicomponent letters (ZB) are combined to form text lines (ZS) in dependence on their horizontal and vertical distances from adjacent connection components, multicomponent letters or text lines of the same text block;
h) the text lines (ZF) thus formed are subjected to a third plausibility check by means of statistics on features of the connection components (Z) and multicomponent letters (ZB) of which they consist and if this third plausibility check has a negative result, are subjected to resegmenting which discards the text lines (ZS) affected;
i) text lines (ZS) are repeatedly built up and resegmented until the third plausibility check has a positive result;
j) within the text lines (ZS), connection components (Z) and multicomponent letters (ZB) are combined to form words in dependence on their horizontal and vertical distances from adjacent connection components, multicomponent letters or words (WS) of the same text line;
k) the words (WS) thus formed are subjected to a fourth plausibility check by means of statistics on features of connection components (Z) or multicomponent letters (ZB) of which they consist and if this fourth plausibility check has a negative result, are subjected to resegmenting which discards the words (WS) affected;
l) words (WS) are repeatedly formed and resegmented until the fourth plausibility check has a positive result.

3. The method according to one of the preceding claims, in which the connection component of the text type or objects composed of these are combined to form objects in dependence on their positions.

4. The method according to one of the preceding claims, in which the connection components of the text type or objects composed of these are combined to form objects in dependence on their sizes.

5. The method according to one of the preceding claims, in which the connection components of the text type or objects composed of these are combined to form objects in dependence on their distances from other connection components or objects.

## Revendications

1. Procédé de traitement de trames binaires, notamment pour la segmentation de la présentation de documents comprenant les étapes suivantes:
a) Des quantités de pixels noirs cohérentes au plan topologique, les composantes relationnelles (Z), sont extraites d'une trame binaire;
b) Les composantes relationnelles (Z) sont représentées à l'aide d'une structure de données hiérarchique, dans laquelle les bords intérieurs et extérieurs sont représentés ensemble par des caractéristiques statistiques de composantes relationnelles (Z);
c) Des caractéristiques statistiques des composantes relationnelles (Z) sont utilisées pour classifier celles-ci comme appartenant au type texte ou à un autre type comme par ex. le type graphique;
d) Les composantes relationnelles de type texte ou les objets constitués de celles-ci sont rassemblés en blocs de textes en fonction de leurs caractéristiques statistiques et mémorisés dans la structure de données hiérarchique, la structure des blocs de textes étant également mémorisée dans la structure de données hiérarchique à partir des composantes relationnelles.

2. Procédé selon la revendication 1, dans lequel les composantes relationnelles sont rassemblées en objets de la manière suivante:
a) Les composantes relationnelles de type texte sont rassemblées, en fonction de leurs écartements horizontaux et verticaux par rapport aux composantes relationnelles ou blocs de textes voisins, en blocs de texte (TB);
b) Les blocs de texte (TB) ainsi formés sont soumis à un premier contrôle de vraisemblance à l'aide d'une statistique sur les caractéristiques des composantes relationnelles (Z) les constituant et en cas de résultat négatif de ce premier contrôle de vraisemblance, sont soumis à une resegmentation qui rejette les blocs de texte (TB) concernés;
c) Les blocs de texte (TB) sont reconstitués et resegmentés jusqu'à ce que le premier contrôle de vraisemblance obtienne un résultat positif;
d) Des composantes relationnelles (Z) à l'intérieur des blocs de texte sont rassemblées en lettres (ZB) à plusieurs composantes en fonction de leurs écartements horizontaux et verticaux et de leur rapport de taille avec les composantes relationnelles (Z) voisines;
e) Les lettres ainsi formées sont soumises à un second contrôle de vraisemblance à l'aide d'une statistique sur les caractéristiques des composantes relationnelles les constituant et en cas de résultat négatif de ce second contrôle de vraisemblance, sont soumises à une resegmentation, qui rejette les lettres concernées;
f) Les lettres sont reformées et resegmentées jusqu'à ce que le second contrôle de vraisemblance obtienne un résultat positif;
g) A l'intérieur des blocs de texte (TB), des composantes relationnelles (Z) et des lettres (ZB) à plusieurs composantes sont rassemblés, en fonction de leurs écartements horizontaux et verticaux par rapport aux composantes relationnelles, aux lettres à plusieurs composants ou aux lignes de texte voisines du même bloc de texte, en lignes de texte (ZS);
h) Les lignes de texte ainsi formées (ZS) sont soumises à un troisième contrôle de vraisemblance à l'aide d'une statistique sur les caractéristiques des composantes relationnelles (Z) les constituant et des lettres à plusieurs composantes (ZB) et, en cas de résultat négatif de ce troisième contrôle de vraisemblance, sont soumises à une resegmentation qui rejette les lignes de texte concernées (ZS);
i) Les lignes de texte (ZS) sont reconstituées et resegmentées jusqu'à ce que le troisième contrôle de vraisemblance obtienne un résultat positif;
j) A l'intérieur des lignes de texte (ZS), des composantes relationnelles (Z) et des lettres à plusieurs composantes (ZB) sont rassemblées en fonction de leurs écartements horizontaux et verticaux par rapport aux composantes relationnelles, aux lettres à plusieurs composantes ou aux mots (WS) voisins de la même ligne de texte, en mots;
k) Les mots (WS) ainsi formés sont soumis à un quatrième contrôle de vraisemblance à l'aide d'une statistique sur les caractéristiques des composantes relationnelles (Z) les constituant ou des lettres à plusieurs composantes (ZB) et, en cas de résultat négatif de ce quatrième contrôle de vraisemblance, sont soumis à une resegmentation qui rejette les mots (WS) concernés;
I) Les mots (WS) sont reformés et resegmentés jusqu'à ce que le quatrième contrôle de vraisemblance obtienne un résultat positif.

3. Procédé selon l'une des revendications précédentes, dans lequel les composantes relationnelles de type texte ou les objets constitués à partir de celles-ci sont rassemblés, en fonction de leurs positions, en objets.

4. Procédé selon l'une des revendications précédentes, dans lequel les composantes relationnelles de type texte ou les objets constitués à partir de celles-ci sont rassemblés, en fonction de leurs tailles, en objets.

5. Procédé selon l'une des revendications précédentes, dans lequel les composantes relationnelles de type texte ou les objets constitués à partir de celles-ci sont rassemblés, en fonction de leurs écartements par rapport aux autres composantes relationnelles ou objets, en objets.
